# EUROPEAN PATENT APPLICATION

(11) **EP 4 604 194 A1**
(43) Date of publication of application: **20.08.2025**
(21) Application number: 23938135.3
(22) Date of filing: 23.08.2023
(51) Int. Cl.: H01M 4/13, H01M 4/131, H01M 4/134, H01M 4/133, H01M 4/38, H01M 4/48, H01M 10/0525

(54) **ELECTRODE ASSEMBLY, SECONDARY BATTERY, AND ELECTRIC DEVICE**

(30) Priority: 25.05.2023 CN 202310597446
(71) Applicant: Contemporary Amperex Technology Co., Limited, Ningde, Fujian 352100 (CN)
(72) Inventor: WU, Kai, Ningde, Fujian 352100 (CN); CHENG, Zhipeng, Ningde, Fujian 352100 (CN); SHI, Dongyang, Ningde, Fujian 352100 (CN); WANG, Yuzhen, Ningde, Fujian 352100 (CN); LIU, Zhi, Ningde, Fujian 352100 (CN); LV, Ruijing, Ningde, Fujian 352100 (CN); JIN, Haizu, Ningde, Fujian 352100 (CN); LI, Baiqing, Ningde, Fujian 352100 (CN)
(74) Representative: Laufhütte, Dieter
(86) International application number: PCT/CN2023/114413
(87) International publication number: WO 2024/239466

(57) **Abstract**

The present application relates to an electrode assembly, a secondary battery, and an electrical apparatus. During the design process, the width of the negative electrode plate is designed to be greater than the width of the positive electrode plate. At the same time, the width difference between the negative electrode plate and the positive electrode plate is correlated with the extension ratio of the negative electrode plate, such that the upper limit value of the width difference between the negative electrode plate and the positive electrode plate does not exceed (4.5 - M1 × a). Thus, it can be seen that using the product of the extension ratio a and the width of the positive electrode plate as a subtractive term reduces the upper limit value of the width difference. Such a designed electrode assembly during cyclic charging and discharging will not experience excessive width of the portion of the negative electrode plate extending beyond the positive electrode plate due to extension of the negative electrode plate. This can effectively alleviate lithium plating within the overhang region between the negative electrode plate and the positive electrode plate, thereby enhancing the reliability of the secondary battery.

## Description

### CROSS-REFERENCE

The present application refers to Chinese Patent Application No. 2023105974466 entitled "ELECTRODE ASSEMBLY, SECONDARY BATTERY, AND ELECTRICAL APPARATUS" filed on May 25, 2023, which is hereby incorporated by reference in its entirety.

### TECHNICAL FIELD

The present application relates to the field of battery technologies, and in particular to an electrode assembly, a secondary battery, and an electrical apparatus.

### BACKGROUND

The statements herein provide only background information related to the present application and do not necessarily constitute prior art.

The electrode assembly is the component in the secondary battery in which the electrochemical reaction occurs, and is formed mainly by the winding or laminated placement of a positive electrode plate and a negative electrode plate, and is usually provided with a diaphragm between the negative electrode plate and the positive electrode plate. When designing a battery assembly, the negative electrode plate is typically designed with an excess to extend beyond the positive electrode plate, where the excess portion is referred to as the overhang region. However, due to limitations inherent in conventional design approaches, the designed electrode assembly is prone to lithium plating phenomena within the overhang region during cyclic charging and discharging, adversely affecting the reliability of the secondary battery.

### SUMMARY OF THE INVENTION

Based on this, it is necessary to provide an electrode assembly, a secondary battery, and an electrical apparatus to provide reasonable guidance for the design of the electrode assembly, effectively alleviate lithium plating within the overhang region, and improve the reliability of the secondary battery.

In a first aspect, the present application provides an electrode assembly, comprising: a negative electrode plate and a positive electrode plate, where a width difference M2-M1 between the negative electrode plate and the positive electrode plate satisfies the following conditions with respect to a: 0 < M2-M1 ≤ 4.5 - M1×a, and 0.2% ≤ a ≤ 1.7%, and 10 mm ≤ M1 ≤ 260 mm, where M1 is a width of the positive electrode plate before the electrode assembly undergoes cyclic charging and discharging, M2 is a width of the negative electrode plate before the electrode assembly undergoes cyclic charging and discharging, and a is an extension ratio of the negative electrode plate, where when a variation ratio of the width of the negative electrode plate before and after an m-th cycle of cyclic charging and discharging of the electrode assembly does not exceed 3%, a maximum width value of the negative electrode plate is denoted as M3, a = (M3 - M2)/M2 × 100%.

For the aforementioned electrode assembly, during the design process, the width of the negative electrode plate is designed to be greater than the width of the positive electrode plate. At the same time, the width difference between the negative electrode plate and the positive electrode plate is correlated with the extension ratio of the negative electrode plate, such that the upper limit value of the width difference between the negative electrode plate and the positive electrode plate does not exceed 4.5 - M1 × a. Thus, it can be seen that using the product of the extension ratio a and the width of the positive electrode plate as a subtractive term reduces the upper limit value of the width difference. Such a designed electrode assembly during cyclic charging and discharging will not experience excessive width of the portion of the negative electrode plate extending beyond the positive electrode plate due to extension of the negative electrode plate. This can effectively alleviate lithium plating within the overhang region between the negative electrode plate and the positive electrode plate, thereby enhancing the reliability of the secondary battery.

In some embodiments, M2-M1 satisfies the following condition: 1.5 mm ≤ M2-M1 ≤ 4.5 - M1 ×a. In this way, the value of M2-M1 is controlled within the range of 1.5 mm to 4.5 - M1 × a, where its minimum value should not be lower than 1.5 mm to reduce the probability of overhang defects caused by process fluctuations, and its maximum value should not exceed 4.5 - M1 × a) to maximize the energy density of the secondary battery while effectively alleviating the problem of lithium plating within the overhang region.

In some embodiments, M2-M1 further satisfies the following condition: 2.8 mm ≤ M2-M1 ≤ 3.3mm. In this way, the value of M2-M1 is further constrained to the range of 2.8 mm to 3.3 mm, which can not only reduce requirements for process capability as much as possible, but also effectively reduce the probability of lithium plating within the overhang region due to design of the negative electrode plate with an excess. Meanwhile, it enables the energy density of the secondary battery to be relatively maximized while meeting reasonable process requirements and effectively mitigating lithium plating within the overhang region.

In some embodiments, M1 further satisfies the following condition: 80 mm ≤ M1 ≤ 120mm. With such a design, M1 is further constrained to the range of 80 mm to 120 mm, which narrows the value range of the upper limit value of M2-M1. This facilitates the setting of values for M2-M1, ensuring that the design of the overhang region can not only reduce process capability requirements but also effectively mitigate lithium plating.

In some embodiments, the extension ratio a further satisfies the following condition: 0.6% ≤ a ≤ 1.0%. With such a design, a is further constrained to the range of 0.6% to 1.0%, which narrows the value range of the upper limit value of M2-M1. This ensures that the design of the overhang region can not only reduce process capability requirements but also effectively mitigate lithium plating.

In some embodiments, the negative electrode plate includes a negative electrode active material, the negative electrode active material including at least one of a silicon material or a carbon material. In this way, silicon material is incorporated as part of the active material on the negative electrode plate, which not only facilitates improvement of the energy density of the secondary battery, but also enables design of the value range of M2-M1 according to the relationship between the silicon material content and the extension ratio a, thereby greatly facilitating the design of the electrode assembly.

In some embodiments, when the negative electrode active material includes the silicon material, a weight percentage of silicon material content in the negative electrode active material is 3% to 40%. In this way, the extension ratio a is correlated with the silicon material content, enabling the value of M2-M1 to be set based on the silicon material content. This facilitates the fabrication of the electrode assembly, thereby ensuring that the designed electrode assembly can effectively mitigate the problem of overhang lithium plating caused by excessive design values.

In some embodiments, a condition satisfied between the silicon material content and the extension ratio a includes: when the weight percentage of the silicon material content is 3% to 10%, 0.2% ≤ a < 0.6%; when the weight percentage of the silicon material content is 10% to 20%, 0.6% ≤ a < 1.1%; when the weight percentage of the silicon material content is 20% to 30%, 1.1% ≤ a < 1.4%; or when the weight percentage of the silicon material content is 30% to 40%, 1.4% ≤ a ≤ 1.7%. In this way, the silicon material content and the extension ratio a mutually correspond in phases, which allows the relationship between the silicon material content and the extension ratio a to be closer, thereby facilitating further improvement in the correlation between the extension ratio a and the silicon material content and making the fabrication of the electrode assembly more convenient.

In some embodiments, the negative electrode plate is stacked on the positive electrode plate, and in a width direction of the electrode assembly, two opposite edges of the negative electrode plate both extend beyond the positive electrode plate. In this way, by configuring two opposite edges of the negative electrode plate to each extend beyond the positive electrode plate, overhang regions exist on both sides of the positive electrode plate, which helps reduce lithium plating caused by the absence of the negative electrode plate on one side of the positive electrode plate.

In some embodiments, in the width direction of the electrode assembly, widths by which the two opposite edges of the negative electrode plate extend beyond the positive electrode plate are denoted as M4 and M5, respectively, where a ratio between M4 and M5 satisfies the following condition: 1/6 ≤ M4/M5 ≤ 6. In this way, by controlling the ratio between M4 and M5 within the range of 1/6 to 6, process requirements for the electrode assembly 20 can be reduced while satisfying M2-M1.

In some embodiments, the ratio between M4 and M5 further satisfies the following condition: 0.8 ≤ M4/M5 ≤ 1.2. In this way, by controlling the ratio between M4 and M5 within the range of 0.8 to 1.2, the portions of the two opposite edges of the negative electrode plate extending beyond the positive electrode plate are made substantially equivalent, thereby ensuring that the overhang regions on both sides of the positive electrode plate maintain consistent and the performance can also maintain consistent.

In some embodiments, the negative electrode plate is stacked on the positive electrode plate, and in a length direction of the electrode assembly, at least one end edge of the negative electrode plate extends beyond the positive electrode plate. In this way, by configuring the negative electrode plate to be beyond the positive electrode plate in the length direction of the electrode assembly, the process capability requirements for preparing the electrode assembly is lowered, thereby significantly facilitating the fabrication of the electrode assembly.

In some embodiments, the positive electrode plate includes a positive electrode active material, the positive electrode active material being an active substance capable of deintercalation of lithium ions. In this way, the composition of the positive electrode active material is rationally designed to obtain a silicon-containing electrode assembly satisfying the requirements.

In a second aspect, the present application provides a secondary battery including the electrode assembly according to any one of the preceding solutions.

In a third aspect, the present application provides an electrical apparatus including the secondary battery according to any one of the above solutions.

### DESCRIPTION OF DRAWINGS

In order to more clearly illustrate the technical solutions of the embodiments of the present application, the drawings to be used in the embodiments of the present application will be described briefly below. Obviously, the drawings described below depict merely some embodiments of the present application. For those skilled in the art, other drawings can also be obtained based on these drawings without any creative effort. In the drawings:
FIG. 1 is an exploded schematic structural diagram of a secondary battery according to one or more embodiments.
FIG. 2 is a partial schematic structural diagram of an unfolded electrode assembly according to one or more embodiments.
FIG. 3 is a schematic structural diagram of the electrode assembly according to FIG. 2 after undergoing at least one cycle of cyclic charging and discharging.
FIG. 4 is a schematic structural division diagram of the electrode assembly according to FIG. 2.

Reference signs
100: secondary battery; 10: end cover; 20: electrode assembly; 21: negative electrode plate; 211: edge; 212: end edge; 2a: first portion; 2b: second portion; 22: positive electrode plate; 30: electrode terminal; 40: case; X: width direction; Y: length direction.

### DETAILED DESCRIPTION

To make the above objectives, features, and advantages of the present application more obvious and understandable, Detailed Description of the present application is described in detail below with reference to the drawings. In the following description, numerous specific details are set forth in order to provide a thorough understanding of the present application. However, the present application can be implemented in many ways other than those described herein, and those skilled in the art can make similar improvements without violating the content of the present application. Therefore, the present application is not limited to the specific embodiments disclosed below.

In the description of the present application, it should be understood that if terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, appear, these terms refer to orientations or positional relationships based on the orientation or positional relationship shown in the accompanying drawings, and are only for the purpose of facilitating the description of the present application and simplifying the description. They do not indicate or imply that the referenced apparatus or component must have a specific orientation or be constructed and operated in a specific orientation. Therefore, these terms should not be construed as limiting the present application.

In addition, if terms such as "first" and "second" appear, these terms are used only for descriptive purposes and should not be construed as indicating or implying relative importance or implicitly specifying the quantity of the indicated technical features. Therefore, the features defined with "first" and "second" may explicitly or implicitly include at least one of the features. In the description of the present application, if the term "plurality of" appears, the meaning of "plurality of" is at least two, such as two, three, etc., unless otherwise explicitly and specifically defined.

In the present application, unless otherwise explicitly defined or limited, if terms such as "mount", "connected", "connection", "fixed", or the like, appear, these terms should be interpreted broadly. For example, it may be a fixed connection, a detachable connection, or a one-piece connection; it may be a mechanical connection or an electrical connection; it may be a direct connection or an indirect connection through an intermediary medium; and it may be communication within two elements or interaction between two elements, unless otherwise expressly limited. For those of ordinary skill in the art, the specific meanings of the above terms in the present application can be understood according to specific situations.

In the present application, unless otherwise explicitly defined or limited, if a description such as "a first feature being on or under a second feature" appears, it may mean that the first and second features are in direct contact, or that the first and second features are in indirect contact through an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below," "underneath" or "under" the second feature may be a case that the first feature is directly underneath or obliquely underneath the second feature, or only means that the level of the first feature is lower than that of the second feature.

It should be noted that if an element is referred to as "fixed to" or "arranged to" another element, it may be directly on the other element or there may be an intermediate element. If one element is considered to be "connected" to another element, it may be directly connected to another element or there may also be an intermediate element. Where applicable, terms used in the present application such as "vertical", "horizontal", "upper", "lower", "left", "right", and similar expressions are for illustrative purposes only and do not represent the sole implementation.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

The electrode assembly is a component where electrochemical reactions occur in a secondary battery and serves as a core component of the secondary battery. During the fabrication process, the negative electrode plate and the positive electrode plate are typically required to be aligned and stacked. However, limited by process capabilities, there is inevitably a certain degree of deviation in the width direction between the negative electrode plate and the positive electrode plate, preventing them from being aligned with each other. This results in a portion of the positive electrode plate not corresponding to the negative electrode plate, causing active lithium deintercalated from the positive electrode plate to fail to effectively intercalate into the negative electrode plate. Consequently, lithium plating occurs between the negative electrode plate and the positive electrode plate.

To address this, when designing an electrode assembly, the negative electrode plate is typically designed with an excess to extend beyond the positive electrode plate, where the excess portion is referred to as the overhang region. Due to process fluctuations, defects in the overhang region are prone to occur. Thus, conventional design approaches maximize the width of the negative electrode plate to reduce the impact of process fluctuations on the overhang region. However, in such a designed electrode assembly, lithium plating still occurs within the overhang region after undergoing cyclic charging and discharging for a period of time, adversely affecting the reliability of the secondary battery.

On this basis, to resolve the problem that the overhang region is prone to lithium plating due to defects in conventional electrode assembly designs, the present application designs an electrode assembly. Through in-depth research during the design process, it was discovered that designing the negative electrode plate with an excessive width leads to an overly large portion extending beyond the positive electrode plate in the width direction. Although the excess region does not correspond to the positive electrode plate, as the number of cycles of cyclic charging and discharging increases, since a Li concentration gradient exists between the main active region and the overhang region, a portion of Li from the main active region intercalates into the overhang region. During deep discharge, Li in the overhang region deintercalates and then intercalates into the corresponding positive electrode edge, causing accumulation of positive electrode Li at the edge. In the next charging process, Li at the positive electrode edge intercalates into the negative electrode. When the Li content accumulated at the positive electrode edge exceeds the intercalation capacity of the negative electrode, lithium plating occurs on the negative electrode. This process strongly correlates with the Li quantity within the overhang region: a larger overhang region results in more Li intercalation due to the concentration gradient within the region, further exacerbating lithium plating. During charging, a portion of active lithium still deintercalates from the positive electrode plate and then intercalates into the excess portion.

Concurrently, studies revealed that the negative electrode plate undergoes outward extension during at least one cycle of cyclic charging and discharging. This extension causes the negative electrode plate to further exceed the positive electrode plate in the width direction. Therefore, synthesizing the above analysis, the present application correlates the extension ratio of the negative electrode plate with the width difference between the negative electrode plate and the positive electrode plate. This ensures that the upper limit value of the width difference between the negative electrode plate and the positive electrode plate does not exceed 4.5 - M1 × a.

Thus, it can be seen that using the product of the extension ratio a and the width of the positive electrode plate as a subtractive term reduces the upper limit value of the width difference. Such a designed electrode assembly during cyclic charging and discharging will not experience excessive width of the portion of the negative electrode plate extending beyond the positive electrode plate due to extension of the negative electrode plate. This can effectively alleviate lithium plating within the overhang region between the negative electrode plate and the positive electrode plate, thereby enhancing the reliability of the secondary battery.

Furthermore, for some negative electrode plates with higher extension ratios, the value of M1 × a is larger, indicating that the upper limit value of M2 - M1 is relatively smaller. Therefore, during the design of this type of negative electrode plate, the width difference between the negative electrode plate and the positive electrode plate can be set relatively smaller. Conversely, for some negative electrode plates with lower extension ratios, the value of M1 × a is smaller, indicating that the upper limit value of M2 - M1 is relatively larger. Therefore, during the design of this type of negative electrode plate, the width difference between the negative electrode plate and the positive electrode plate can be set relatively larger. This approach enables more rational design of the overhang region of an electrode assembly, reducing the probability of lithium plating caused by indiscriminate over-design.

The secondary battery disclosed in embodiments of the present application may be used in, but not limited to, electrical apparatuses, such as a vehicle, a ship, or an aircraft. The secondary battery disclosed in the present application may be used to form a power supply system of the electrical apparatus.

In the power supply system, there may be a plurality of secondary batteries, and the plurality of secondary batteries may be connected in series, in parallel, or in hybrid connection, where hybrid connection refers to a combination of series and parallel connections among the plurality of secondary batteries. The plurality of secondary batteries may be directly connected in series, in parallel, or in hybrid connection, and the integrated unit formed by the plurality of secondary batteries is then accommodated within a box body; and of course, the battery may also be formed by first connecting the plurality of secondary batteries in series, in parallel, or in hybrid connection to form battery module forms, and then connecting a plurality of battery modules in series, in parallel, or in hybrid connection to form an integrated unit, which is accommodated within the box body. The battery may further include other structures. For example, the battery may further include busbar components for achieving electrical connections between the plurality of secondary batteries. The secondary battery may have a cylindrical shape, a flat shape, a rectangular shape, or other shapes.

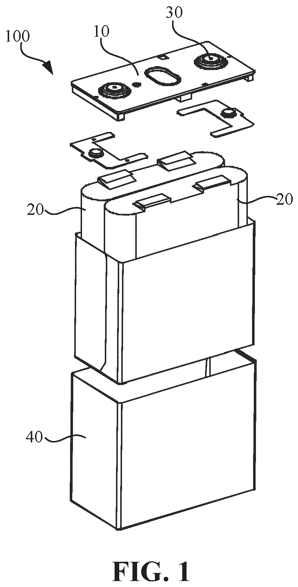

Please refer to FIG. 1. FIG. 1 is an exploded structural diagram of a secondary battery 100 according to one or more embodiments. The secondary battery 100 refers to the minimal unit constituting the battery. As shown in FIG. 1, the secondary battery 100 includes an end cover 10, a case 40, an electrode assembly 20, and other functional components.

The end cover 10 refers to a component that is capped over the opening of the case 40 to isolate the internal environment of the secondary battery 100 from the external environment. Without limitation, the shape of the end cover 10 can be adapted to the shape of the case 40 to fit the case 40. Optionally, the end cover 10 can be made of a material (such as aluminum alloy) with a certain hardness and strength, so that the end cover 10 is less likely to deform when subjected to extrusion and collision, which allows the secondary battery 100 to have a higher structural strength and improved safety performance. The end cover 10 can be provided with functional components such as electrode terminals 30. The electrode terminal 30 can be used for electrical connection with the electrode assembly 20 for use in outputting or inputting electrical energy from or to the secondary battery 100. In some embodiments, the end cover 10 may also be provided with a pressure relief mechanism for releasing the internal pressure when the internal pressure or temperature of the secondary battery 100 reaches a threshold value. The end cover 10 may also be made of a variety of materials, such as copper, iron, aluminum, stainless steel, aluminum alloy, plastic, etc., and the embodiments of the present application are not particularly limited in this regard. In some embodiments, an insulating member may also be provided on the inner side of the end cover 10, and the insulating member can be used to isolate the electrical connection components inside the case 40 from the end cover 10 to reduce the risk of short circuit. For example, the insulating member may be made of plastic, rubber, and the like.

The case 40 is an assembly for fitting the end cover 10 to form the internal environment of the secondary battery 100, wherein the formed internal environment can be used to accommodate the electrode assembly 20, electrolyte solution, and other components. The case 40 and the end cover 10 may be separate components, and an opening may be provided in the case 40, and the internal environment of the secondary battery 100 may be formed by making the end cover 10 cover the opening at the opening. Without limitation, it is also possible to make the end cover 10 and the case 40 integrated. Specifically, the end cover 10 and the case 40 may first form a common connecting face before the other components enter the case, and then the end cover 10 is made to cover the case 40 when the interior of the case 40 needs to be encapsulated. The case 40 may be of various shapes and sizes, such as a rectangular solid, a cylinder, and a hexagonal prism. Specifically, the shape of the case 40 may be determined according to the specific shape and size of the electrode assembly 20. The case 40 may be made of various materials, such as copper, iron, aluminum, stainless steel, aluminum alloy, and plastic, which is not particularly limited in the embodiments of the present application.

The electrode assembly 20 is a component in which an electrochemical reaction occurs in the secondary battery 100. The case 40 may contain one or more electrode assemblies 20 inside. The electrode assembly 20 is formed primarily by the winding or laminated placement of a positive electrode plate 22 and a negative electrode plate 21, and is typically provided with a diaphragm between the positive electrode plate 22 and the negative electrode plate 21. The portions of the positive electrode plate 22 and the negative electrode plate 21 having an active substance constitute a main body portion of the electrode assembly 20, and the portions of the positive electrode plate 22 and the negative electrode plate 21 not having an active substance each form a tab. The positive electrode tab and the negative electrode tab may be co-located at one end of the main body part or located at two ends of the main body part, respectively. In a charging or discharging process of the battery, the positive active substance and the negative active substance react with the electrolytic solution, and the tabs are connected to the electrode terminal 30 to form a current loop.

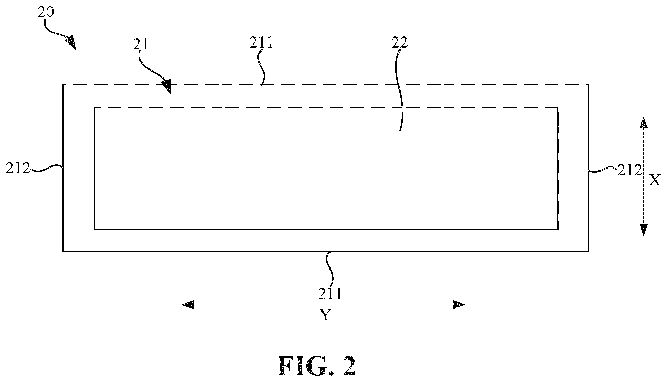

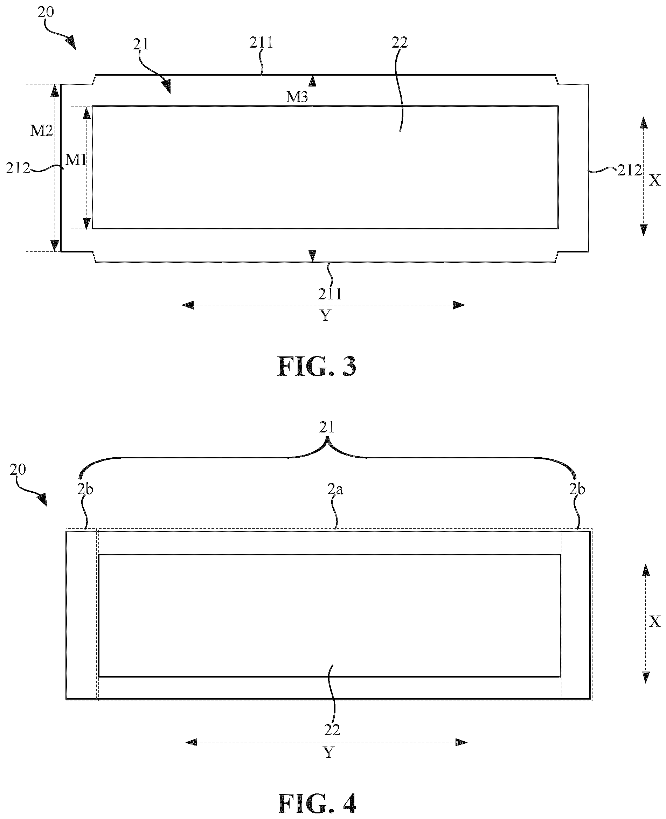

According to some embodiments of the present application, referring to FIGS. 2 and 3, the present application provides an electrode assembly 20. The electrode assembly 20 includes: a negative electrode plate 21 and a positive electrode plate 22. A width difference M2-M1 between the negative electrode plate 21 and the positive electrode plate 22 satisfies the following conditions with respect to a: 0 < M2-M1 ≤ 4.5 - M1×a, and 0.2% ≤ a ≤ 1.7%, and 10 mm ≤ M1 ≤ 260 mm, where M1 is a width of the positive electrode plate 22 before the electrode assembly 20 undergoes cyclic charging and discharging, M2 is a width of the negative electrode plate 21 before the electrode assembly 20 undergoes cyclic charging and discharging, and a is an extension ratio of the negative electrode plate 21, where when a variation ratio of the width of the negative electrode plate 21 before and after an m-th cycle of cyclic charging and discharging of the electrode assembly 20 does not exceed 3%, a maximum width value of the negative electrode plate is denoted as M3, a = (M3 - M2)/M2 × 100%.

M1 and M2 are the widths of the positive electrode plate 22 and the negative electrode plate 21, respectively, before the electrode assembly 20 undergoes any charging or discharging. It can also be understood that M1 and M2 are the widths of the positive electrode plate 22 and the negative electrode plate 21 before formation of the electrode assembly 20.

M3 refers to the maximum value of the width of the negative electrode plate 21 when the variation ratio of its width before and after the m-th cycle of cyclic charging and discharging of the electrode assembly 20 does not exceed 3%. After the electrode assembly 20 undergoes the m-th cycle of cyclic charging and discharging, in the length direction Y of the electrode assembly 20, the portion of the negative electrode plate 21 that corresponds to the positive electrode plate 22 performs lithium deintercalation actions, causing extension along the width direction X of the electrode assembly 20; in contrast, the portion of the negative electrode plate 21 that does not correspond to the positive electrode plate 22 does not perform lithium deintercalation actions and thus exhibits no extension in the width direction X. Consequently, the width of the negative electrode plate 21 along the length direction Y varies, and M3 is therefore set as the maximum value of the width on the negative electrode plate 21.

It should be noted that, when obtaining the width M3 value, the specific number of cycles that the electrode assembly 20 undergoes is irrelevant, that is, no specific value of m needs to be acquired. It is only required that, before a certain cycle of cyclic charging and discharging is performed, the width of the negative electrode plate 21 is recorded; and then the width of the negative electrode plate 21 after the cyclic charging and discharging is recorded, provided that the ratio of the width difference of the two to the width of the negative electrode plate 21 before the certain cycle of cyclic charging and discharging does not exceed 3%. Since a majority of extension of the negative electrode plate 21 occurs after the first cycle of cyclic charging and discharging, when obtaining the extension ratio a, the width value M3 of the negative electrode plate 21 can be measured after subjecting the electrode assembly 20 to at least one cycle of cyclic charging and discharging.

In the length direction Y, the portion of the negative electrode plate 21 that does not correspond to the positive electrode plate 22 does not perform lithium deintercalation actions and thus does not extend in the width direction X. The width value corresponding to this portion can be considered equal to M2. Therefore, if reverse analysis is conducted on a competitor's product, the width of the portion of the negative electrode plate 21 that does not correspond to the positive electrode plate 22 can be taken as M2, and the width of one end of the positive electrode plate 22 along the length direction Y can be taken as M1.

For ease of understanding, please refer to FIG. 4. The negative electrode plate 21 along the length direction Y of the electrode assembly 20 may include a first portion 2a and a second portion 2b, where the first portion 2a corresponds to the positive electrode plate 22 and is used for stacking the positive electrode plate 22, and the second portion 2b extends from the first portion 2a along the length direction Y beyond the positive electrode plate 22. After the electrode assembly 20 undergoes at least one cycle of cyclic charging and discharging, the width corresponding to the first portion 2a is M3, the width corresponding to the second portion 2b is M2, and the width of one end of the positive electrode plate 22 along the length direction Y is recorded as M1. Thus, by measuring their respective width values, it can be determined whether the electrode assembly 20 falls within the range of: 0 < M2 - M1 ≤ 4.5 - M1 × a, and 0.2% ≤ a ≤ 1.7%, and 10 mm ≤ M1 ≤ 260 mm.

Here, when reversely obtaining or testing the width M3 of the negative electrode plate 21, the charge/discharge rate is not constrained, provided that the electrode assembly 20 is in a fully charged and discharged state during cyclic charging and discharging, for example: performing full charging/discharging operations on the electrode assembly 20 at 0.5C/0.5C.

Of course, it is readily understandable that the number of second portions 2b may be one or two. When there are two second portions 2b, the two second portions 2b are respectively disposed at both ends of the first portion 2a along the length direction Y.

Additionally, the value of M2 - M1 may be any value within 0 to (4.5 - M1 × a), that is, the set value of M2 - M1 does not exceed (4.5 - M1 × a) under the allowable range of process capability. Here, process capability should be understood as the alignment capability between the negative electrode plate 21 and the positive electrode plate 22 in the width direction X. When the width difference between the negative electrode plate 21 and the positive electrode plate 22 is small, they are prone to deviation and misalignment, resulting in lithium plating phenomena. Therefore, a larger value of M2 - M1 more easily satisfies the allowable range of process capability, reducing the requirements on process capability. At the same time, it can also reduce the adverse impact of process fluctuations on the overhang region. Furthermore, in other embodiments, the value of M2 - M1 may also be limited between 1 and (4.5 - M1 × a).

Thus, it can be seen that using the product of the extension ratio a and the width of the positive electrode plate 22 as a subtractive term reduces the upper limit value of the width difference. Such a designed electrode assembly 20 during cyclic charging and discharging will not experience excessive width of the portion of the negative electrode plate 21 extending beyond the positive electrode plate 22 due to extension of the negative electrode plate 21. This can effectively alleviate lithium plating within the overhang region between the negative electrode plate 21 and the positive electrode plate 22, thereby enhancing the reliability of the secondary battery 100.

According to some embodiments of the present application, optionally, M2-M1 satisfies the following condition: 1.5mm ≤ M2-M1 ≤ 4.5 - M1×a.

If the value of M2 - M1 is less than 1.5 mm, the requirements on process capability are higher, and once process fluctuations occur, defects in the overhang region are easily caused, which makes alignment impossible, leading to lithium plating issues. If the value of M2 - M1 is excessively large, it not only sacrifices the energy density of the secondary battery 100, but also causes active lithium retained within the overhang region to fail to intercalate into the positive electrode plate 22 due to the excessive width of the overhang region, resulting in lithium plating within the overhang region.

To address this issue, in this embodiment, the value of M2-M1 is controlled within the range of 1.5 mm to 4.5 - M1 × a, where its minimum value should not be lower than 1.5 mm to reduce the probability of overhang defects caused by process fluctuations, and its maximum value should not exceed 4.5 - M1 × a to maximize the energy density of the secondary battery 100 while effectively alleviating the problem of lithium plating within the overhang region.

According to some embodiments of the present application, optionally, M2-M1 further satisfies the following condition: 2.8 mm ≤ M2-M1 ≤ 3.3mm.

The value of M2 - M1 may be any value within the range of 2.8 mm to 3.3 mm. For example: the value of M2 - M1 may be, but is not limited to, 2.8 mm, 2.9 mm, 3.0 mm, 3.1 mm, 3.2 mm, 3.3 mm, etc.

In this way, the value of M2-M1 is further constrained to the range of 2.8 mm to 3.3 mm, which can not only reduce requirements for the process capability as much as possible but also effectively reduces the probability of lithium plating within the overhang region due to design of the negative electrode plate 21 with an excess. Meanwhile, it enables the energy density of the secondary battery 100 to be relatively maximized while meeting reasonable process requirements and effectively mitigating lithium plating within the overhang region.

According to some embodiments of the present application, optionally, M1 further satisfies the following condition: 80 mm ≤ M1 ≤ 120mm.

M1 is the width of the positive electrode plate 22 before the electrode assembly 20 undergoes cyclic charging and discharging. In this embodiment, M1 is further constrained to the range of 80 mm to 120 mm, thereby narrowing the value range of the upper limit value of M2 - M1, which facilitates the setting of the value of M2 - M1.

The value of M1 may be any value within the range of 80 mm to 120 mm. For example: the value of M1 may be, but is not limited to, 80 mm, 90 mm, 100 mm, 110 mm, 120 mm, etc.

With such a design, M1 is further constrained to the range of 80 mm to 120 mm, which narrows the value range of the upper limit value of M2-M1. This facilitates the setting of values for M2-M1, ensuring that the design of the overhang region can not only reduce process capability requirements but also effectively mitigate lithium plating.

According to some embodiments of the present application, optionally, the extension ratio a further satisfies the following condition: 0.6% ≤ a ≤ 1.0%.

In this embodiment, the extension ratio a is further constrained to the range of 0.6% to 1.0%, thereby narrowing the value range of the upper limit value of M2 - M1, which facilitates the setting of the value of M2 - M1.

The value of a may be any value within the range of 0.6% to 1.0%. For example: the value of a may be, but is not limited to, 0.6%, 0.7%, 0.8%, 0.9%, 1.0%, etc.

With such a design, a is further constrained to the range of 0.6% to 1.0%, which narrows the value range of the upper limit value of M2-M1. This ensures that the design of the overhang region can not only reduce process capability requirements but also effectively mitigate lithium plating.

According to some embodiments of the present application, optionally, the negative electrode plate 21 includes a negative electrode active material. The negative electrode active material includes at least one of a silicon material or a carbon material.

The substance coated on the negative electrode plate 21 includes a negative electrode active material, a conductive agent, a binder, etc., in specific mixing proportions. Here, the negative electrode active material includes a silicon material and a carbon material. For example: during the preparation of the negative electrode active material, a silicon-containing active material may be blended into graphite in a certain proportion.

Here, the conductive agent refers to a substance that enhances conductive contact between active materials and improves electronic conductivity, for example: conductive graphite, conductive carbon black, conductive carbon fiber, graphene, etc. The binder refers to a polymer compound that adheres the active material to a current collector. For example: it may be one selected from the group consisting of polyvinylidene fluoride, polyacrylic acid, polymethacrylic acid, poly(methyl acrylate), poly(ethyl acrylate), pure acrylic emulsion, polyacrylic acid-styrene copolymer, polyvinylpyrrolidone, styrene-butadiene rubber, epoxy resin, neopentyl glycol diacrylate, sodium polyacrylate series, polytetrafluoroethylene, polyimide, polyamide, polyester, cellulose derivatives, polysulfone, or a combination of two or more thereof.

The silicon material may refer to elemental silicon, silicon oxide, or a mixture thereof, and may include at least one of Si or SiOz (0 < z < 2). When the silicon material is coated on the negative electrode plate 21 as an active material, it has a higher specific capacity compared to graphite. Therefore, incorporating a silicon-containing active material into the negative electrode plate 21 helps improve the energy density of the secondary battery 100. Additionally, different silicon material contents result in different extension ratios a for the negative electrode plate 21. For example: as the silicon material content increases, the extension ratio a of the negative electrode plate 21 also increases.

Silicon material is incorporated as part of the active material on the negative electrode plate 21, which not only facilitates improvement of the energy density of the secondary battery 100, but also enables design of the value range of M2-M1 according to the relationship between the silicon material content and the extension ratio a, thereby greatly facilitating the design of the electrode assembly 20.

According to some embodiments of the present application, optionally, when the negative electrode active material includes the silicon material, a weight percentage of silicon material content in the negative electrode active material is 3% to 40%.

It can be seen that, for a silicon-containing negative electrode plate 21, when the silicon material content is 3% to 40%, the corresponding extension ratio of the negative electrode plate 21 is 0.2% ≤ a ≤ 1.7%. Here, the silicon material content may be, but is not limited to, 3%, 10%, 15%, 20%, 25%, 30%, 35%, 40%, etc.

The extension ratio a is correlated with the silicon material content, enabling the value of M2 - M1 to be set based on the silicon material content. This not only facilitates the fabrication of the electrode assembly 20, but also facilitates reverse value selection of the electrode assembly 20. For example: there are multiple methods to obtain the weight percentage of the silicon-containing active material. As an example, the ICP method (Inductive Coupled Plasma Emission Spectrometer) to measure the silicon content on the negative electrode plate 21. In the ICP testing method, the secondary battery 100 is disassembled, and the negative electrode plate 21 is taken out; the negative electrode plate 21 is weighed and sent for ICP testing to obtain the silicon content; then, the weight percentage of the silicon material on the negative electrode plate 21 is calculated through back-calculation.

In this way, the extension ratio a is correlated with the silicon material content, enabling the value of M2-M1 to be set based on the silicon material content. This facilitates the fabrication of the electrode assembly 20, thereby ensuring that the designed electrode assembly 20 can effectively mitigate the problem of overhang lithium plating caused by excessive design values.

According to some embodiments of the present application, optionally, a condition satisfied between the silicon material content and the extension ratio a includes: when the weight percentage of the silicon material content is 3% to 10%, 0.2% ≤ a < 0.6%; when the weight percentage of the silicon material content is 10% to 20%, 0.6% ≤ a < 1.1%; when the weight percentage of the silicon material content is 20% to 30%, 1.1% ≤ a < 1.4%; or when the weight percentage of the silicon material content is 30% to 40%, 1.4% ≤ a ≤ 1.7%.

The corresponding relationship between the silicon material content and the extension ratio a may be as follows. When the silicon material content is 3% to 10%, 0.2% ≤ a ≤ 0.6%. At this time, the silicon material content may be, but is not limited to, 3%, 5%, 7%, 9%, 10%, etc.; and the extension ratio a may be, but is not limited to, 0.2%, 0.3%, 0.4%, 0.5%, 0.6%, etc. When the silicon material content is 10% to 20%, 0.6% ≤ a ≤ 1.1%. At this time, the silicon material content may be, but is not limited to, 10%, 12%, 14%, 16%, 18%, 20%, etc.; and the extension ratio a may be, but is not limited to, 0.6%, 0.7%, 0.8%, 0.9%, 1.0%, 1.1%, etc. When the silicon material content is 20% to 30%, 1.1% ≤ a ≤ 1.4%. At this time, the silicon material content may be, but is not limited to, 20%, 22%, 24%, 26%, 28%, 30%, etc.; and the extension ratio a may be, but is not limited to, 1.1%, 1.2%, 1.3%, 1.4%, etc. When the silicon material content is 30% to 40%, 1.1% ≤ a ≤ 1.7%. At this time, the silicon material content may be, but is not limited to, 30%, 32%, 34%, 36%, 38%, 40%, etc.; and the extension ratio a may be, but is not limited to, 1.4%, 1.5%, 1.6%, 1.7%, etc.

The silicon material content and the extension ratio a mutually correspond in phases, which allows the relationship between the silicon material content and the extension ratio a to be closer, thereby facilitating further improvement in the correlation between the extension ratio a and the silicon material content and making the fabrication of the electrode assembly more convenient.

According to some embodiments of the present application, optionally, please refer to FIG. 2. The negative electrode plate 21 is stacked on the positive electrode plate 22, and in a width direction X of the electrode assembly 20, two opposite edges 211 of the negative electrode plate 21 both extend beyond the positive electrode plate 22.

The two opposite edges 211 of the negative electrode plate 21 along the width direction X each extend beyond the positive electrode plate 22, which indicates that overhang regions exist on both sides of the positive electrode plate 22 along the width direction X. Regarding the specific amount by which the two opposite edges 211 of the negative electrode plate 21 extend beyond the positive electrode plate 22 along the width direction X, this may be determined based on actual process capabilities. Of course, specifically, in some embodiments, the widths by which the two opposite edges 211 of the negative electrode plate 21 extend beyond the positive electrode plate 22 along the width direction X are equal.

By configuring two opposite edges 211 of the negative electrode plate 21 to each extend beyond the positive electrode plate 22, overhang regions exist on both sides of the positive electrode plate 22, which helps reduce lithium plating caused by the absence of the negative electrode plate 21 on one side of the positive electrode plate 22.

According to some embodiments of the present application, optionally, in the width direction X of the electrode assembly 20, widths by which the two opposite edges 211 of the negative electrode plate 21 extend beyond the positive electrode plate 22 are denoted as M4 and M5, respectively, where a ratio between M4 and M5 satisfies the following condition: 1/6 ≤ M4/M5 ≤ 6.

The value of M4 may be greater than the value of M5, may be less than the value of M5. Of cause, the values of the two may be equal. This indicates that when the positive electrode plate 22 is attached to the negative electrode plate 21, the positive electrode plate 22 may be positioned closer to one edge of the negative electrode plate 21 or may be positioned closer to the other edge of the negative electrode plate 21.

By controlling the ratio between M4 and M5 within the range of 1/6 to 6, process requirements for the electrode assembly 20 can be reduced while satisfying M2-M1.

According to some embodiments of the present application, optionally, the ratio between M4 and M5 further satisfies the following condition: 0.8 ≤ M4/M5 ≤ 1.2.

The ratio between M4 and M5 determines which edge 211 of the negative electrode plate 21 the positive electrode plate 22 is biased toward. When the ratio between M4 and M5 is 1, it is indicated that the positive electrode plate 22 is located on middle region of the negative electrode plate 21 along the width direction X, such that overhang regions formed on both sides of the positive electrode plate 22 maintain consistent and the performance can also maintain consistent.

The ratio between M4 and M5 may be any value within the range of 0.8 to 1.2. For example, the ratio between M4 and M5 may be, but is not limited to, 0.8, 0.9, 1.0, 1.1, 1.2, etc.

By controlling the ratio between M4 and M5 within the range of 0.8 to 1.2, the portions of the two opposite edges 211 of the negative electrode plate 21 extending beyond the positive electrode plate 22 are made substantially equivalent, thereby ensuring that the overhang regions on both sides of the positive electrode plate 22 maintain consistent and the performance can also maintain consistent.

According to some embodiments of the present application, optionally, please refer to FIG. 2. The negative electrode plate 21 is stacked on the positive electrode plate 22, and in a width direction X of the electrode assembly 20, at least one end edge 212 of the negative electrode plate 21 extends beyond the positive electrode plate 22.

In addition to extending beyond the positive electrode plate 22 in the width direction X, the negative electrode plate 21 also extends beyond the positive electrode plate 22 in the length direction Y of the electrode assembly 20. This further lowers requirements for the process capability, thereby significantly facilitating the fabrication of the electrode assembly 20.

In the length direction Y of the electrode assembly 20, one end edge 212 of the negative electrode plate 21 may extend beyond the positive electrode plate 22, or both end edges 212 may each extend beyond the positive electrode plate 22. For the portion of the negative electrode plate 21 that extends beyond the positive electrode plate 22 in the length direction Y, since it does not correspond to the positive electrode plate 22 at all, this portion will not, or almost will not, perform lithium deintercalation actions, meaning that no extension occurs on the excess portion in the length direction Y. In this case, for the electrode assembly 20 that has been used or has undergone multiple cycles of cyclic charging and discharging, the width of this portion can be measured to obtain the M2 value of the negative electrode plate 21, thereby facilitating reverse analysis.

By configuring the negative electrode plate 21 to be beyond the positive electrode plate 22 in the length direction Y of the electrode assembly 20, the process capability requirements for preparing the electrode assembly 20 is lowered, thereby significantly facilitating the fabrication of the electrode assembly 20.

According to some embodiments of the present application, optionally, the positive electrode plate 22 includes a positive electrode active material. The positive electrode active material is an active substance capable of deintercalation of lithium ions.

The positive electrode active material refers to a lithium-containing or lithium iron phosphate-based transition metal composite oxide, where the transition metal is selected from at least one of nickel, cobalt, manganese, and aluminum. For example: the positive electrode active material may be expressed using a general structural formula Lib(NicCodMne)O2, where: 0.9 ≤ b ≤ 1.2, 0.2 < c < 1, 0 < d < 1, and c + d + e = 1.

The composition of the positive electrode active material is rationally designed to obtain a silicon-containing electrode assembly 20 satisfying the requirements.

According to some embodiments of the present application, the present application provides a secondary battery 100. The secondary battery 100 includes the electrode assembly 20 according to any one of the preceding solutions.

According to some embodiments of the present application, the present application provides an electric apparatus. The electrical apparatus includes the secondary battery 100 as described above.

According to some embodiments of the present application, please refer to FIGS. 1 to 4, the present application provides an electrode assembly 20. By utilizing the high-expansion characteristics of silicon and the feature that the electrode plate undergoes extension in the width direction X during full charging, a relationship between overhang design of the positive and negative electrodes and silicon content is established, thereby reducing energy density loss and alleviating overhang lithium plating issues caused by excessive design values. By correlating different extension ratios with different silicon content, a relationship between silicon content and the negative electrode-positive electrode width overhang is established: 1.5 mm < M2 - M1 < 4.5- M1×a, where M2 and M1 are the initial width values of the negative electrode plate 21 and the positive electrode plate 22, respectively, and a is the extension ratio of the negative electrode plate 21. If the value of M2 - M1 is designed too small, requirements for the process capability are higher, and process fluctuations easily cause overhang defects; if designed too large, not only is the battery cell energy density sacrificed, but lithium plating occurs within the overhang region due to the "reservoir effect", compromising the battery cell performance and safety.

In order to make the purpose, technical solution and advantages of the present application more concise and clearer, the present application is illustrated with the following specific embodiments, but the present application is by no means limited to these embodiments. Embodiments described below are only the preferred embodiments of the present application and may be used to describe the present application and are not to be construed as limiting the scope of the present application. It should be noted that any modifications, equivalent substitutions, improvements, etc., made within the spirit and principles of the present application shall be included in the scope of protection of the present application.

In order to better illustrate the present application, the contents of the present application are further described below in connection with the embodiments. The following are specific embodiments.

### Embodiment 1

### Positive electrode plate 22

The positive electrode active substance ternary material nickel-cobalt-manganese (NCM), the conductive agent acetylene black, and the binder polyvinylidene fluoride (PVDF) are added to a certain amount of NMP in a mass ratio of 97:2:1. After uniform stirring, a positive electrode slurry is prepared. The positive electrode slurry is uniformly coated onto a 15 µm-thick aluminum foil with an areal density of 330 mg/1540.25 mm². After drying and cold pressing, the foil is die-cut with a slitting width of 100 mm, forming the positive electrode plate 22 for a lithium-ion battery.

### Negative electrode plate 21

The negative electrode active substance graphite, the conductive carbon Super P, the thickener (CMC), and the binder (SBR) are added to a certain amount of water in a mass ratio of 95:3:1:1. After uniform stirring, a negative electrode slurry is prepared. The negative electrode slurry is uniformly coated onto a 6 µm-thick copper foil with an areal density of 140 mg/1540.25 mm². After drying in an oven and cold pressing, the foil is die-cut with a slitting width of 103.5 mm, forming the negative electrode plate 21 for a lithium-ion battery.

### Separator

Polyethylene is used as the base film, and a 3 µm-thick layer of aluminum oxide is coated on the base film to obtain the separator.

### Electrolyte solution

Lithium hexafluorophosphate is dissolved in a solvent of DMC:DEC:EC (propylene carbonate (PC), ethylene carbonate (EC), diethyl carbonate (DEC), dimethyl carbonate (DMC), ethyl methyl carbonate (EMC)) with a volume ratio of 1:1:1 to obtain the lithium-ion battery electrolyte solution.

### Preparation of secondary battery 100

The positive electrode plate 22, the negative electrode plate 21, and the separator described above are wound, followed by packaging, electrolyte injection, formation, and other processes to fabricate the secondary battery 100 of Embodiment 1.

### Acquisition of extension ratio

The fabricated secondary battery 100 described above is first subjected to formation with the following steps: it is charged to 3.0V at 0.02C, then charged to 3.4V at 0.1C, and finally charged to 3.9V at 0.2C; subsequently, it is subjected to one cycle at a rate of 0.5C/0.5C within a voltage range of 2.5V to 4.25V; after fully charging, the secondary battery 100 is disassembled, and the width M3 of the obtained negative electrode plate 21 is measured as 103.50 mm; according to the formula (M3 - M2)/M2, the extension ratio a is calculated as 0%; at this point, M2 - M1 is calculated as 0 to 4.50 mm based on the inequality.

### Embodiment 2

This embodiment is substantially consistent with Embodiment 1, except that during the fabrication of the negative electrode plate 21, the formulation of the negative electrode slurry is as follows: the mass ratio of the negative electrode active material artificial graphite, SiOx (X=0.6), conductive carbon Super P, thickener (CMC), and binder (SBR) is 92:3:3:1:1; after coating and cold pressing, the negative electrode plate 21 has a slitting width of 103.2 mm. M3 is measured as 103.53 mm, and the extension ratio is calculated as a = 0.32%. At this time, according to the inequality, M2 - M1 is calculated as 0 to 4.18 mm.

### Embodiment 3

This embodiment is substantially consistent with Embodiment 1, except that during the fabrication of the negative electrode plate 21, the formulation of the negative electrode slurry is as follows: the mass ratio of the negative electrode active material artificial graphite, SiOx (X=0.6), conductive carbon Super P, thickener (CMC), and binder (SBR) is 85:10:3:1:1; after coating and cold pressing, the negative electrode plate 21 has a slitting width of 102.8 mm. M3 is measured as 103.93 mm, and the extension ratio is calculated as a = 1.1%. At this time, according to the inequality, M2 - M1 is calculated as 0 to 3.40 mm.

### Embodiment 4

This embodiment is substantially consistent with Embodiment 1, except that during the fabrication of the negative electrode plate 21, the formulation of the negative electrode slurry is as follows: the mass ratio of the negative electrode active material artificial graphite, SiOx (X=0.6), conductive carbon Super P, thickener (CMC), and binder (SBR) is 55:40:3:1:1; after coating and cold pressing, the negative electrode plate 21 has a slitting width of 101.8 mm. M3 is measured as 103.53 mm, and the extension ratio is calculated as a = 1.7%. At this time, according to the inequality, M2 - M1 is calculated as 0 to 2.80 mm.

### Comparative Example 1

This comparative example is substantially consistent with Embodiment 1, except that after coating and cold pressing, the negative electrode plate 21 has a slitting width of 105 mm.

### Comparative Example 2

This comparative example is substantially consistent with Embodiment 2, except that after coating and cold pressing, the negative electrode plate 21 has a slitting width of 105 mm.

### Comparative Example 3

This comparative example is substantially consistent with Embodiment 3, except that after coating and cold pressing, the negative electrode plate 21 has a slitting width of 105 mm.

### Comparative Example 4

This comparative example is substantially consistent with Embodiment 4, except that after coating and cold pressing, the negative electrode plate 21 has a slitting width of 105 mm.

The following describes the performance test of the secondary battery 100. For specific parameters, reference may be made to Table 1.

### Judgment of lithium plating in overhang regions:

The fabricated secondary batteries 100 described above are first charged to 3.0V at 0.02C, then charged to 3.4V at 0.1C, finally charged to 4.2V at 0.2C, and then subjected to 300 cycles at a rate of 0.5C/0.5C within the voltage range of 2.5V to 4.25V; after cycling, they are disassembled and observed in an environment with air humidity below 2%, and the degree of lithium plating is judged based on the color depth of lithium plating. Here, if light gray appears in the overhang region, it is judged as slight lithium plating; if gray white appears, it is judged as moderate lithium plating; if bright white appears, it is judged as severe lithium plating. At the same time, if the same color appears continuously in the overhang region, it is judged as continuous lithium plating; if the same color appears discontinuously in the overhang region, it is judged as intermittent lithium plating.

### Capacity retention ratio of the secondary battery 100:

Test condition: under the room temperature condition, the secondary battery is charged at a rate of 0.5C and discharged at a rate of 0.5C, and subjected to 300 cycles within the voltage range of 2.5V to 4.25V.

Test procedure: the secondary battery is allowed to stand for 30 minutes, then charged at a rate of 0.5C to a voltage of 4.25V, further charged at constant voltage of 4.25V until the current reached 0.05C, allowed to stand for 5 minutes, and then discharged at a rate of 0.5C to a voltage of 2.5V. This constitutes one charge/discharge cycle, with the discharge capacity recorded during each cycle. Capacity retention ratio after 300 cycles (%) = (Discharge capacity at the 300th cycle / Discharge capacity at the first cycle) × 100%.

It should be noted that the term "cycle within the voltage range of 2.5V to 4.25V" appearing above refers to being charged to 4.25V at a rate of 0.5C, further charged at constant voltage of 4.25V until the current reaches 0.05C, allowed to stand for 5 minutes, then discharged at a rate of 0.5C to a voltage of 2.5V.

**Table 1**

| | Width M1 of positive electrode plate 22 (mm) | Width M2 of negative electrode plate 21 (mm) | Width M3 of negative electrode plate 21 after cycling (mm) | Extension ratio a | Capacity retention ratio | Overhang lithium plating |
|---|---|---|---|---|---|---|
| Embodiment 1 | 100 | 103.5 | 103.50 | 0% | 96.1% | Continuous slight lithium plating |
| Comparative Example 1 | 100 | 105 | 103.50 | 0% | 95.8% | Intermittent moderate lithium plating |
| Embodiment 2 | 100 | 103.2 | 103.53 | 0.32% | 95.3% | Intermittent slight lithium plating |
| Comparative Example 2 | 100 | 105 | 103.53 | 0.32% | 94.9% | Continuous moderate lithium plating |
| Embodiment 3 | 100 | 102.8 | 103.93 | 1.1% | 93.8% | No lithium plating |
| Comparative Example 3 | 100 | 105 | 103.93 | 1.1% | 93.2% | Continuous moderate lithium plating |
| Embodiment 4 | 100 | 101.8 | 103.53 | 1.7% | 91.7% | No lithium plating |
| Comparative Example 4 | 100 | 105 | 103.53 | 1.7% | 90.9% | Continuous heavy lithium plating |

By comparing Embodiment 1 with Comparative Example 1, Embodiment 2 with Comparative Example 2, Embodiment 3 with Comparative Example 3, and Embodiment 4 with Comparative Example 4, it can be seen that under the premise of minimizing the requirements for process capability, the width difference between the negative electrode plate 21 and positive electrode plate 22 that is designed according to the above formula, during cyclic charging and discharging of the electrode assembly 20, can effectively alleviate lithium plating within the overhang region between the negative electrode plate 21 and positive electrode plate 22, thereby improving the reliability of the secondary battery 100. Meanwhile, while satisfying reasonable process requirements and effectively alleviating lithium plating within the overhang region, the capacity retention ratio of the secondary battery 100 can be improved, thereby enabling the energy density of the secondary battery 100 to be relatively maximized. It should be noted that the active material in the negative electrode plate 21 of both Embodiment 1 and Comparative Example 1 is graphite material, which employs interlayer lithium intercalation. Therefore, after cyclic charging and discharging, the rebound of the negative electrode plate 21 is small, and the extension in the width direction is very small and almost negligible. For this reason, the measured value of the extension ratio a in Embodiment 1 and Comparative Example 1 is 0%.

The technical features of the embodiments described above can be combined arbitrarily. In order to make the description concise, not all possible combinations of the technical features in the above embodiments are described. However, all the combinations of the technical features should be considered as falling within the scope described in the specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. **An electrode** assembly, comprising:
a negative electrode plate (21) and a positive electrode plate (22), wherein
a width difference M2-M1 between the negative electrode plate (21) and the positive electrode plate (22) satisfies the following conditions with respect to a: 0 < M2-M1 ≤ 4.5 - M1×a, and 0.2% ≤ a ≤ 1.7%, and 10 mm ≤ M1 ≤ 260 mm;
wherein M1 is a width of the positive electrode plate (22) before the electrode assembly undergoes cyclic charging and discharging, M2 is a width of the negative electrode plate (21) before the electrode assembly undergoes cyclic charging and discharging, and a is an extension ratio of the negative electrode plate (21), wherein when a variation ratio of the width of the negative electrode plate (21) before and after an m-th cycle of cyclic charging and discharging of the electrode assembly does not exceed 3%, a maximum width value of the negative electrode plate is denoted as M3, a = (M3 - M2)/M2 × 100%.

2. The electrode assembly according to claim 1, wherein M2-M1 satisfies the following condition: 1.5 mm ≤ M2-M1 ≤ 4.5 - M1×a.

3. The electrode assembly according to claim 2, wherein M2-M1 further satisfies the following condition: 2.8 mm ≤ M2-M1 ≤ 3.3 mm.

4. The electrode assembly according to claim 1, wherein M1 further satisfies the following condition: 80 mm ≤ M1 ≤ 120 mm.

5. The electrode assembly according to any one of claims 1 to 4, wherein the extension ratio a further satisfies the following condition: 0.6% ≤ a ≤ 1.0%.

6. The electrode assembly according to any one of claims 1 to 4, wherein the negative electrode plate (21) comprises a negative electrode active material, the negative electrode active material comprising at least one of a silicon material or a carbon material.

7. The electrode assembly according to claim 6, wherein when the negative electrode active material comprises the silicon material, a weight percentage of silicon material content in the negative electrode active material is 3% to 40%.

8. The electrode assembly according to claim 7, wherein a condition satisfied between the silicon material content and the extension ratio a includes:
when the weight percentage of the silicon material content is 3% to 10%, 0.2% ≤ a < 0.6%;
when the weight percentage of the silicon material content is 10% to 20%, 0.6% ≤ a < 1.1%;
when the weight percentage of the silicon material content is 20% to 30%, 1.1% ≤ a < 1.4%; and
when the weight percentage of the silicon material content is 30% to 40%, 1.4% ≤ a ≤ 1.7%.

9. The electrode assembly according to any one of claims 1 to 4, wherein the negative electrode plate (21) is stacked on the positive electrode plate (22), and in a width direction (X) of the electrode assembly, two opposite edges (211) of the negative electrode plate (21) both extend beyond the positive electrode plate (22).

10. The electrode assembly according to claim 9, wherein in the width direction (X) of the electrode assembly, widths by which the two opposite edges (211) of the negative electrode plate (21) extend beyond the positive electrode plate (22) are denoted as M4 and M5, respectively, wherein a ratio between M4 and M5 satisfies the following condition: 1/6 ≤ M4/M5 ≤ 6.

11. The electrode assembly according to claim 10, wherein the ratio between M4 and M5 further satisfies the following condition: 0.8 ≤ M4/M5 ≤ 1.2.

12. The electrode assembly according to any one of claims 1 to 4, wherein the negative electrode plate (21) is stacked on the positive electrode plate (22), and in a length direction (Y) of the electrode assembly, at least one end edge (212) of the negative electrode plate (21) extends beyond the positive electrode plate (22).

13. The electrode assembly according to any one of claims 1 to 4, wherein the positive electrode plate (22) comprises a positive electrode active material, the positive electrode active material being an active substance capable of deintercalation of lithium ions.

14. A secondary battery (100), the secondary battery (100) comprising the electrode assembly according to any one of claims 1 to 13.

15. An electrical apparatus, comprising the secondary battery (100) according to claim 14.
